# EUROPEAN PATENT APPLICATION

(11) **EP 4 152 637 A1**
(43) Date of publication of application: **22.03.2023**
(21) Application number: 22184611.6
(22) Date of filing: 13.07.2022
(51) Int. Cl.: H04B 7/06, H04L 5/00, H04W 56/00

(54) **SYNCHRONIZATION SIGNAL TRANSMISSIONS USING SIMULTANEOUSLY-ACTIVE AND SPATIALLY-MULTIPLEXED BEAMS**

(30) Priority: 17.09.2021 US 202163245526 P
(71) Applicant: Apple Inc., Cupertino, CA 95014 (US)
(72) Inventor: BAR-SADE, Idan, Cupertino, 95014 (US); PANCHAL, Ajay, Cupertino, 95014 (US); MUCKE, Christian W., Cupertino, 95014 (US); IYER, Lakshmi, Cupertino, 95014 (US); ETTUS, Matthew N., Cupertino, 95014 (US); KODALI, Sree Ram, Cupertino, 95014 (US)
(74) Representative: Zacco Denmark A/S

(57) **Abstract**

The present application relates to synchronization signal transmission using multiple beams. In an example, a network node may support M beams covering M areas. However, only *K* < M beams may be used at any time for transmission of synchronization signals. Accordingly, the network node cycles through the K beams allocated to synchronization signal transmission, whereby a synchronization signal is transmitted on K spatially-multiplexed and simultaneously-active beams to reach K coverage areas during a first time period, then next *K* coverage areas during a second time period, and so on until all of the *M* coverage areas are reached to restart the cycle. A UE is located in only one coverage area, and would see the synchronization signal beam once during a period of time equal to the time needed to cycle through the *M* coverage areas.

## Description

Fifth-generation mobile network (5G) is a wireless standard which aims to improve data transmission speed, reliability, availability, and more. This standard, while still developing, includes numerous details relating to communications between a network and a user equipment (UE).

### BRIEF DESCRIPTION OF THE DRAWINGS

FIG. 1 illustrates an example of a network environment, in accordance with some embodiments.
FIG. 2 illustrates an example of a beam coverage across a geographical area, in accordance with some embodiments.
FIG. 3 illustrates an example of a geographical area divided into coverage areas, each corresponding to a beam, in accordance with some embodiments.
FIG. 4 illustrates an example of cycling of synchronization signal beams across coverage areas, in accordance with some embodiments.
FIG. 5 illustrates an example of synchronization signal beam visibility to a user equipment (UE), in accordance with some embodiments.
FIG. 6 illustrates an example of a procedure for a synchronization between a UE and a network node, in accordance with some embodiments.
FIG. 7 illustrates an example of re-synchronization between a UE and a network node based on synchronization signal beam visibility, in accordance with some embodiments.
FIG. 8 illustrates an example of a procedure for re-synchronization between a UE and a network node based on synchronization signal beam visibility, in accordance with some embodiments.
FIG. 9 illustrates an example of an operational flow/algorithmic structure for cycling synchronization signal beams across coverage areas, in accordance with some embodiments.
FIG. 10 illustrates an example of an operational flow/algorithmic structure for determining synchronization signals based on synchronization signal beam visibility, in accordance with some embodiments.
FIG. 11 illustrates an example of receive components, in accordance with some embodiments.
FIG. 12 illustrates an example of a UE, in accordance with some embodiments.
FIG. 13 illustrates an example of a base station, in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

Generally, a user equipment (UE) may communicate with a network node such that the UE can access a network (e.g., a fifth-generation mobile network). The UE may be located within a coverage area, whereas the network node may provide communication coverage to a plurality of coverage areas. This coverage can be achieved by using beams, where each beam corresponds to one of the coverage areas. For successful communications, synchronization signals are typically transmitted periodically. In certain situations, the number of coverage areas can be larger than the number of beams used for the transmission of a synchronization signal. These beams are referred to herein as synchronization signal beams (or SSB beams in the context of a fifth-generation mobile network). In such situations, the synchronization signals are cycled through the geographical area. At any point in time, a synchronization signal is transmitted using synchronization signal beams to only a subset of the coverage areas, where these beams are simultaneously active and spatially multiplexed. At another point in time, another subset of the coverage areas is covered by synchronization signal beams.

To illustrate, consider an example of fifty coverage areas. In this example, the network node can support ten simultaneously-active and spatially-multiplexed synchronization signal beams. Accordingly, during a first time period, a synchronization signal is transmitted to ten of the fifty coverage areas. During a second next time period, a synchronization signal is transmitted to another ten of the fifty coverage areas, and so on. By the end of a fifth time period, synchronization signal transmissions would have covered the fifty coverage areas and correspond to one synchronization signal transmission cycle. During the sixth time period, the next synchronization signal transmission cycle would have started, and the first ten coverage areas would be covered again.

The following is a glossary of terms that may be used in this disclosure.

The term "circuitry" as used herein refers to, is part of, or includes hardware components such as: an electronic circuit, a logic circuit, a processor (shared, dedicated, or group), or memory)shared, dedicated, or group( ,an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide (at least some of) the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer to an application processor, baseband processor, a central processing unit (CPU), a graphics processing unit, a single-core processor, a dual-core processor, a triple-core processor, a quad-core processor, or any other device capable of executing (or otherwise operating) computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE" as used herein refers to a device with radio communication capabilities, and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device, or any computing device including a wireless communications interface.

The term "base station" as used herein refers to a device with radio communication capabilities, that is a network element of a communications network, and that may be configured as an access node in the communications network. The term "network node" as used herein refers to a node of a communication network that enables access to a UE to the communication network. The network node can be, or include, a base station. A UE's access to the communications network may be managed, at least in part, by the base station, whereby the UE connects with the base station to access the communications network. Depending on the radio access technology (RAT), the base station can be referred to as a gNodeB (gNB), eNodeB (eNB), access point, etc.

The term "computer system" as used herein refers to any type of interconnected electronic devices, computer devices, or components thereof. Additionally, the term "computer system" or "system" may refer to various components of a computer that are communicatively-coupled with one another. Furthermore, the term "computer system" or "system" may refer to multiple computer devices or multiple computing systems that are communicatively-coupled with one another, and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing or network resources. "System resources" may be considered as a set of coherent functions, network data objects, or services, accessible through a server where such system resources reside on a single host or multiple hosts, and are clearly identifiable.

The term "channel" as used herein refers to any transmission medium, either tangible or intangible, which is used to communicate data or a data stream. The term "channel" may be synonymous with, or equivalent to, "communications channel," "data communications channel," "transmission channel," "data transmission channel," "access channel," "data access channel," "link," "data link," "carrier," "radio-frequency carrier," or any other similar term denoting a pathway or medium through which data is communicated. Additionally, the term "link" as used herein refers to a connection between two devices for the purpose of transmitting and receiving information.

The terms "instantiate," "instantiation," and the like as used herein refer to the creation of an instance. An "instance" also refers to a concrete occurrence of an object, which may occur, for example, during execution of program code.

The term "connected" may refer to two or more elements which, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to, or referred to as, a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

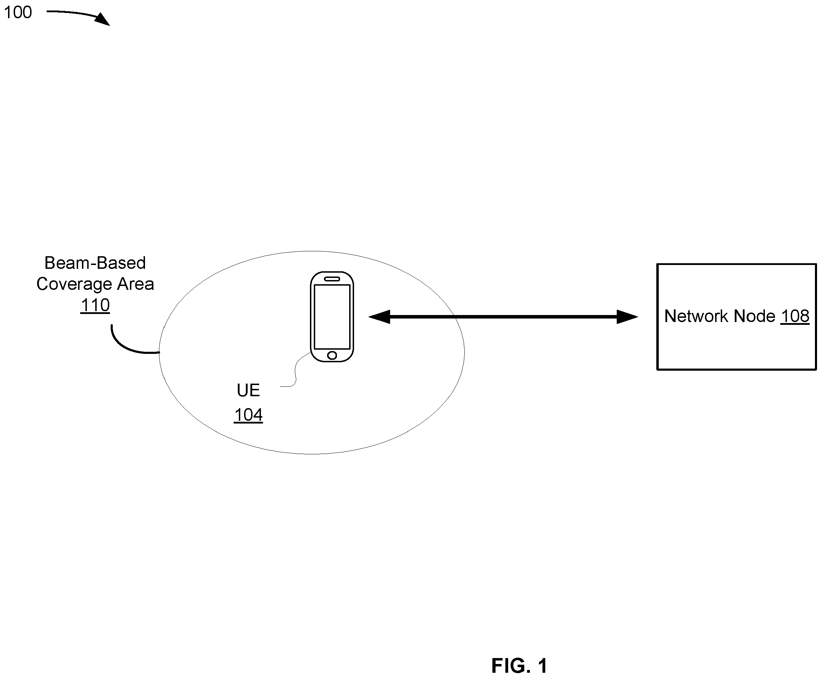

FIG. 1 illustrates a network environment 100, in accordance with some embodiments. The network environment 100 may include a UE 104 and a network node 108. The network node 108 may be a base station that provides a wireless access cell; for example, a Third-Generation Partnership Project (3GPP) New Radio (NR) cell, through which the UE 104 may communicate with the network node 108. This base station may be a component of a terrestrial network, a component of a non-terrestrial network, or components distributed between a terrestrial network and a non-terrestrial network. The UE 104 and the network node 108 may communicate over an interface compatible with 3GPP technical specifications, such as those that define Fifth-Generation (5G) NR system standards.

The network node 108 may transmit information (for example, data and control signaling) in the downlink direction by mapping logical channels on the transport channels, then transport channels onto physical channels. The logical channels may transfer data between a radio link control (RLC) and media access control (MAC) layers; the transport channels may transfer data between the MAC and PHY layers; and the physical channels may transfer information across the air interface. The physical channels may include a physical broadcast channel (PBCH); a physical downlink control channel (PDCCH); and a physical downlink shared channel (PDSCH).

The PBCH may be used to broadcast system information that the UE 104 may use for initial access to a serving cell. The PBCH may be transmitted along with physical synchronization signals (PSS) and secondary synchronization signals (SSS) in a synchronization signal (SS)/PBCH block. The SS/PBCH blocks (SSBs) may be used by the UE 104 during a cell search procedure and for beam selection.

The PDSCH may be used to transfer end-user application data, signaling radio bearer (SRB) messages, system information messages (other than, for example, MIB), and paging messages.

The PDCCH may transfer downlink control information (DCI) that is used by a scheduler of the network node 108 to allocate both uplink and downlink resources. The DCI may also be used to provide uplink power control commands, configure a slot format, or indicate that preemption has occurred.

The network node 108 may also transmit various reference signals to the UE 104. The reference signals may include demodulation reference signals (DMRSs) for the PBCH, PDCCH, and PDSCH. The UE 104 may compare a received version of the DMRS with a known DMRS sequence that was transmitted to estimate an impact of the propagation channel. The UE 104 may then apply an inverse of the propagation channel during a demodulation process of a corresponding physical channel transmission.

The reference signals may also include CSI-RS. The CSI-RS may be a multipurpose downlink transmission that may be used for CSI reporting, beam management, connected mode mobility, radio link failure detection, beam failure detection and recovery, and fine-tuning of time and frequency synchronization.

The reference signals and information from the physical channels may be mapped to resources of a resource grid. There is one resource grid for a given antenna port, subcarrier spacing configuration, and transmission direction (for example, downlink or uplink). The basic unit of an NR downlink resource grid may be a resource element, which may be defined by one subcarrier in the frequency domain, and one orthogonal frequency division multiplexing (OFDM) symbol in the time domain. Twelve consecutive subcarriers in the frequency domain may compose a physical resource block (PRB). A resource element group (REG) may include one PRB in the frequency domain, and one OFDM symbol in the time domain, for example, twelve resource elements. A control channel element (CCE) may represent a group of resources used to transmit PDCCH. One CCE may be mapped to a number of REGs; for example, six REGs.

Transmissions that use different antenna ports may experience different radio channels. However, in some situations, different antenna ports may share common radio channel characteristics. For example, different antenna ports may have similar Doppler shifts, Doppler spreads, average delay, delay spread, or spatial receive parameters (for example, properties associated with a downlink received signal angle of arrival at a UE). Antenna ports that share one or more of these large-scale radio channel characteristics may be said to be quasi co-located (QCL) with one another. 3GPP has specified four types of QCL to indicate which particular channel characteristics are shared. In QCL Type A, antenna ports share Doppler shift, Doppler spread, average delay, and delay spread. In QCL Type B, antenna ports share Doppler shift and Doppler spread. In QCL Type C, antenna ports share Doppler shift and average delay. In QCL Type D, antenna ports share spatial receiver parameters.

The network node 108 may provide transmission configuration indicator (TCI) state information to the UE 104 to indicate QCL relationships between antenna ports used for reference signals (for example, synchronization signal/PBCH or CSI-RS) and downlink data or control signaling (for example, PDSCH or PDCCH). The network node 108 may use a combination of RRC signaling, MAC control element signaling, and DCI, to inform the UE 104 of these QCL relationships.

The UE 104 may transmit data and control information to the network node 108 using physical uplink channels. Different types of physical uplink channels are possible, including a physical uplink control channel (PUCCH) and a physical uplink shared channel (PUSCH). Whereas the PUCCH carries control information from the UE 104 to the network node 108, such as uplink control information (UCI), the PUSCH carries data traffic (e.g., end-user application data) and can carry UCI.

In an example, communications with the network node 108 and/or the base station can use channels in the frequency range 1 (FR1) band (between 40 Megahertz (MHz) and 7,125 MHz) and/or frequency range 2 (FR2) band (between 24,250 MHz and 52,600 MHz), although other frequency ranges are possible (e.g., a frequency range having a frequency larger than 52,600 MHz). The FR1 band includes a licensed band and an unlicensed band. The NR unlicensed band (NR-U) includes a frequency spectrum that is shared with other types of radio access technologies (RATs) (e.g., LTE-LAA, WiFi, etc.). A listen-before-talk (LBT) procedure can be used to avoid or minimize collision between the different RATs in the NR-U, whereby a device applies a clear channel assessment (CCA) check before using the channel.

As further illustrated in FIG. 1, the UE 104 can be located within a beam-based coverage area 110. In particular, the network node 108 may cover the beam-based coverage area 110 with a beam and, similarly, other areas with other beams. The beam-based coverage area 110 may contain multiple UEs, similar to the UE 104. These UEs may communicate with the network node 108 on both the uplink and the downlink based on the beam of the beam-based coverage area 110. Periodically, a synchronization signal (e.g., SSB) can be transmitted to these UEs using the beam to support the communication.

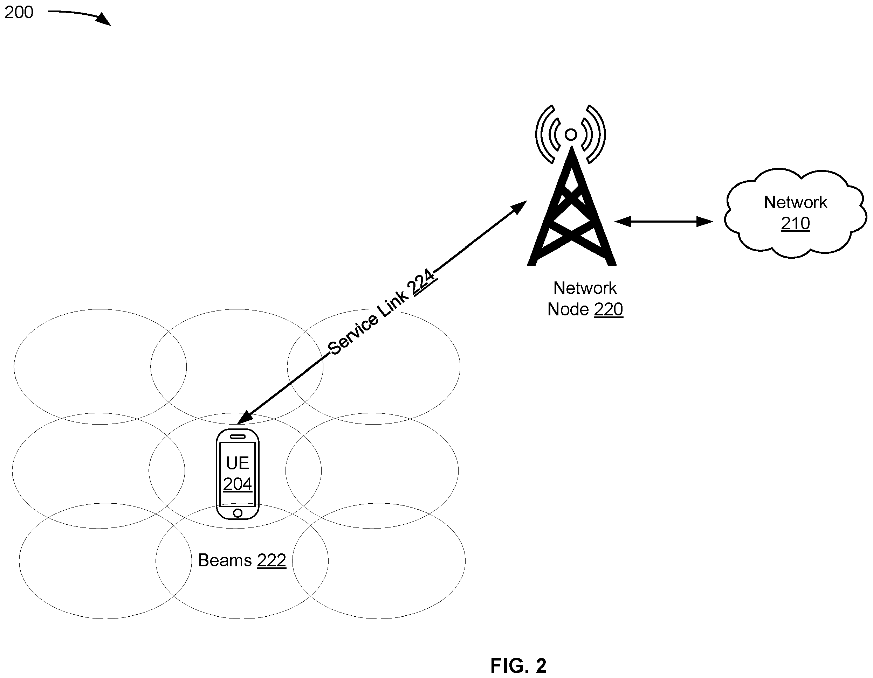

FIG. 2 illustrates an example of a beam coverage 200 across a geographical area in accordance with some embodiments. A network 210 can be accessible to UEs via a network node 210 that cover the geographical areas with beams 222. Each one of the beams 232 corresponds to a coverage area within the geographical area.

In an example, the network 210 can implement a particular radio access technology (RAT) such as, but not limited, to 5G. The network 210 can also be a terrestrial network, in which case the network node 220 can be a terrestrial access node, such as base station. In another example, the network 210 can be, at least in part, a non-terrestrial network where the network node 220 may be implemented on a satellite and may be coupled with the ground network via a gateway.

Generally, the network node 220 can support a large number of beams 222 to cover a large geographical area, where this area can be divided in a large number of coverage areas (potentially in the hundreds, if not thousands), each covered by a beam. A UE 204 can be located in a coverage area and can connect with the network node via a feeder link 224. The feeder link 224 can use mmWave or sub-mmWave frequencies (e.g., in the S band or Ka band). In this way, the UE 204 can have access to the network 210 via the network node 220.

In the context of a terrestrial network, current 5G-NR technical specifications support a limited number of beams and corresponding SSBs in different frequency ranges. The maximum number of SSB beams is four for frequencies less than 3 GHz, eight for frequencies less than 6 GHz, and sixty-four for mmWave frequencies. In the context of a non-terrestrial network, a satellite can support a larger number of SSB beams. However, this number may be limited and be smaller than the number of geographical coverage areas.

Hence, in both contexts, situations can arise where the number of coverage areas (referred to herein as *M*, which is a positive integer) is larger than the number of beams that can be allocated for synchronization signal transmissions (e.g., this number is referred to herein as *K,* which is a positive integer). In such situations (e.g., *K* < *M*), an efficient synchronization mechanism for UEs is needed, and is described in connection with the next figures. Briefly, the mechanism involves the cycling *of K* synchronization signal across the *M* coverage areas. A synchronization signal transmission cycle includes time periods *T_{ss,i}.* multiple During each time period *T_{ss,i}, K* beams that are simultaneously active and spatially multiplexed are used for synchronization signal transmission to a set "*i*" *of K* coverage areas of the *M* coverage areas. After the different time periods *T_{ss,i},* the synchronization signal transmission cycle repeats. In the context of the a fifth-generation mobile network, a synchronization signal includes SSB, and a synchronization signal beam is referred to as an SSB beam. In the interest of explanation, the fifth-generation mobile network is used herein. But the embodiments of the present disclosure are not limited as such and can be applied to other types of networks that rely on UE synchronization based on synchronization signals.

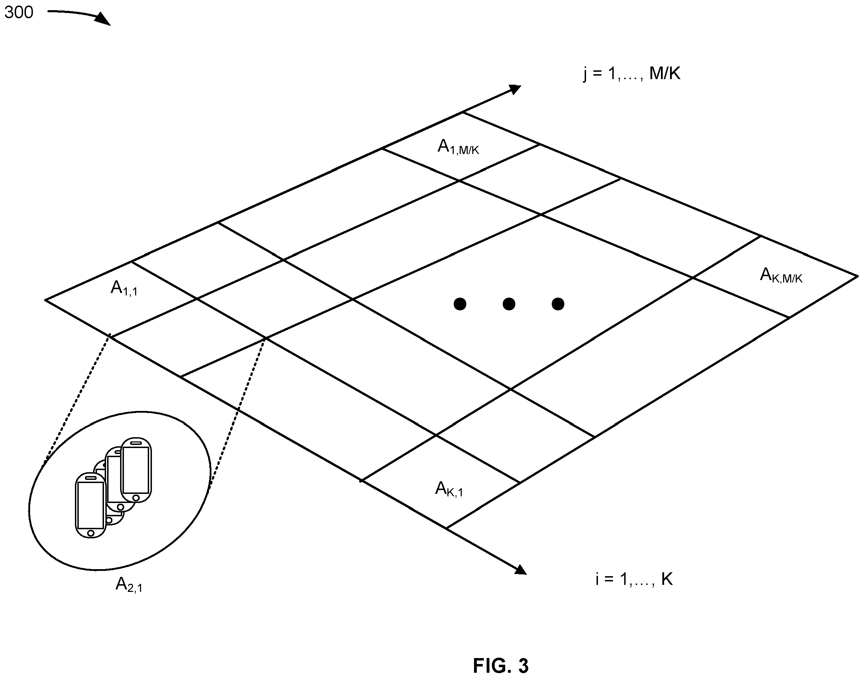

FIG. 3 illustrates an example of a geographical area 300 divided into coverage areas, each corresponding to a beam, in accordance with some embodiments. In an example, the number of coverage areas is *M.* Each of these coverage areas is covered by a beam of a network node. Simultaneous coverage (e.g., beams being simultaneously active) can be across all of the *M* coverage areas or a subset of the *M* coverage areas.

As explained herein above, the network node can be configured to allocate *K* beams for SSB transmission in the downlink. In other words, *K* SSB beams can be simultaneously active at any point in time.

The coverage areas are indexed as A*_{i.j}*. When *K* < *M*, *i* varies between "1" and "*K*," and j varies between "1" and "*M*/*K*." The remaining beams (e.g., *M* - *K*) may be used for purposes other than SSB transmission (e.g., for data transmission, including small data in the time and frequency domain, paging, measurements). These remaining beams are referred to herein as non-SSB beams. When *K* ≥ *M*, all beams are allocated for SSB transmission. In this case, no non-SSB beam is available.

In an example, an SSB beam may not only carry an SSB. In particular, the SSB beam may also be used for data transmission by carrying a data signal. Conversely, a non-SSB beam can be used for SSB also (e.g., can carry an SSB).

Each coverage area A*_{i.j}* can contain a cluster of UEs. Accordingly, these UEs are covered by a beam associated with the coverage area A*_{i.j}*. The sizes of the coverage areas A*_{i.j}*, (and, thus, the beam width can vary), whereby these areas may be sized differently. Even if the coverage areas A*_{i.j}* are sized differently, the clusters may be sized to be substantially similar (e.g., to have a similar number of UEs).

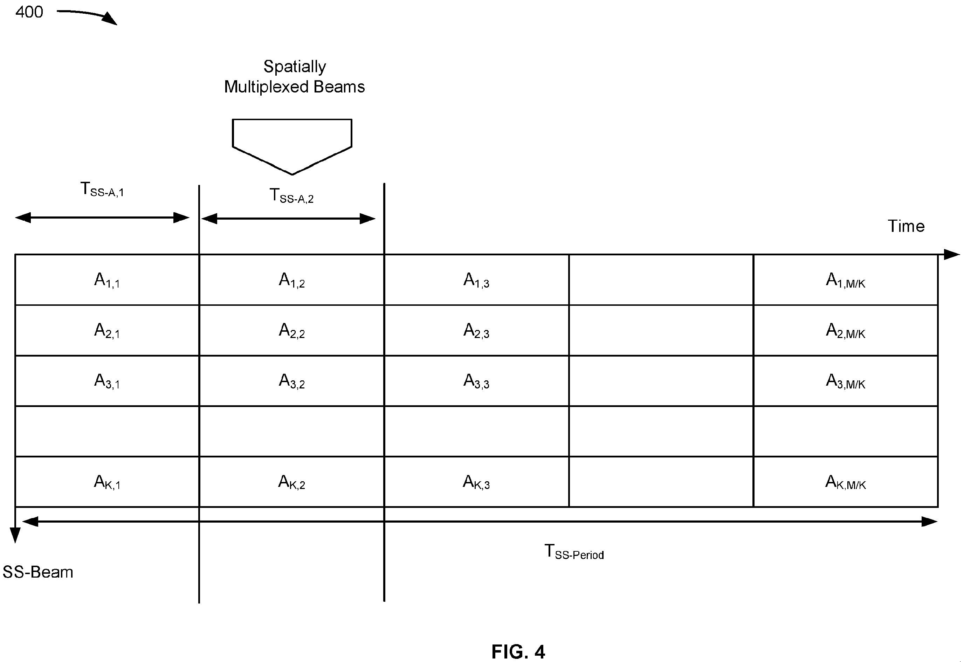

FIG. 4 illustrates an example of cycling 400 of synchronization signal beams across coverage areas, in accordance with some embodiments. In an example, the number *M* of coverage areas is larger than the number *K* of beams that can be allocated to SSB transmission, where these *K* beams are simultaneously active and spatially multiplexed. The horizontal axis represents time. The vertical axis represents the *K* SSB beams. Referring back to FIG. 3, the *M* coverage areas are indexed as A*_{i,j}*, where i varies between "1" and "*K*" (corresponding to the vertical axis) and j varies between "1" and "*M*/*K*" (corresponding to the horizontal axis).

During a time period *T_{ss-A}*, *K* SSB beams are simultaneously-active and spatially-multiplexed to cover a set of *K* coverage areas. In the nomenclature of this time period, "SS" and "A" are used to indicate synchronization signal and area, respectively. The time period T*_{ss-A}* is indexed with a time index *t* that varies between "1" and "*M*/*K*." For *t* = 1 (e.g., during a first time period *T_{ss-A,1}*), a first set *K* of coverage areas is covered by *K* first SSB beams, where each first SSB beam corresponds to one of these coverage areas. This set includes coverage areas A*_{1,1}* through A*_{K,1}* (e.g., i varies between "1" and "*K*" and *j* = 1). Similarly, for *t* = 2 (e.g., during a second time period *T_{SS-A,2}*), a second set *K* of coverage areas (e.g., A*_{1,2}* through *A_{K,2}*) is covered by *K* second SSB beams, and so on until *t* = *M*/*K* (e.g., the last time period *T*_{*SS-A,M*/*K*}), where the last set *K* of coverage areas (e.g., A_{*1,M*/*K*}through A_{*K,M*/*K*}) is covered by *K* last SSB beams. The sum of the different time periods T*_{SS-A,t}* corresponds to a time period T_{SS-period} of a single SSB transmission cycle. The time T_{SS-period} represents the periodicity at which the SSB transmission cycle is repeated.

As such, during any time period T*_{ss-A},* spatially multiplexed *K* beams transmit SSB in different *K* coverage areas cluster simultaneously, such that there is no interference among these beams or with any other non-SS beam. Each one of the *K* SSB beams is visible to a particular coverage area for a fixed amount of time (e.g., the length of the time period T*_{SS-A}*). Visibility refers to UE (or a cluster of UEs) in the particular coverage area receiving the SSB beam. The network node cycles through all beams in the *M* coverage areas every time period T_{SS-Period} (e.g., a time interval during which SSB beams are consecutively visible in coverage area sets, and needed for a completion of synchronization signal transmissions by the network node across a plurality of coverage areas, using simultaneously-active and spatially-multiplexed beams). In this way, the network node covers all the *M* coverage areas_where UEs may be present for timing synchronization with the network node.

The length of a time period T*_{SS-A}* is set such that this time period is sufficient for a new or existing UE to perform a synchronization procedure successfully with the network node. In comparison, the time period T_{SS-Period} is set such that this time period is short enough for a UE not to lose the synchronization due to absence of an SSB beam during this period. These two parameters can be configured by the network node (or some other component of a network), and indicated to the UE via a signaling message (e.g., in an RRC configuration message).

In the above example, a vertical pattern for allocating *K* beams for SSB transmission is illustrated. In particular, during each time period T*_{SS-A}*, a vertical set *of K* coverage areas is covered. However, the embodiments are not limited as such, and other patterns are possible. For example, a horizontal pattern, a diagonal pattern, or a random allocation pattern is possible, as long as the *K* beams are spatially multiplexed during the time period *T_{SS-A}.*

In the illustration of FIG. 4, the same length of the time period T*_{SS-A}* is usable across the coverage area sets (e.g., T_{*SS-A*,1} = T_{*SS-A*,2}). However, this length can be also variable (e.g., T_{*SS-A,*1} ≠ T_{*SS-A*,2})- In this case, the variability can be based on a number of factors, including type of UEs or UE clusters, and/or size of UE clusters. For example, UE clusters containing mission critical devices can be associated with a same set of coverage areas, and this set can have a longer time period T*_{SS-A}* relative to another set that does not correspond to clusters of mission critical devices. The reason is that the longer time period T*_{SS-A}* results in a higher likelihood of the mission critical devices completing their synchronization with the network node. Similarly, UE clusters containing a similar large number of UEs can be associated with a same set of coverage areas, and this set can have a longer time period T*_{SS-A}* relative to another set that corresponds to smaller size UE clusters. The reason is that if the shorter time period T*_{SS-A}* were not sufficient for synchronization with the network node, then the impact may be limited to a smaller number of UEs.

Also in the illustration of FIG. 4, the time period T*_{SS-A}* occurs once per coverage area set during the SSB transmission cycle (e.g., each coverage area A*_{i,j}* receives only one SSB beam during the SSB transmission cycle). However, more than one occurrence during the SSB transmission cycle (e.g., a set of coverage areas, say A*_{1,1}* through A*_{K,1}*,) receives SSB beams during multiple time periods T*_{SS-A}* within the SSB transmission cycle. In this case, the variability can be based on a number of factors, including type of UEs or UE clusters, and/or size of UE clusters. For example, UE clusters containing mission critical devices can be associated with a same set of coverage areas, and the SSB beam visibility to this set can have multiple occurrences during the SSB transmission cycle.

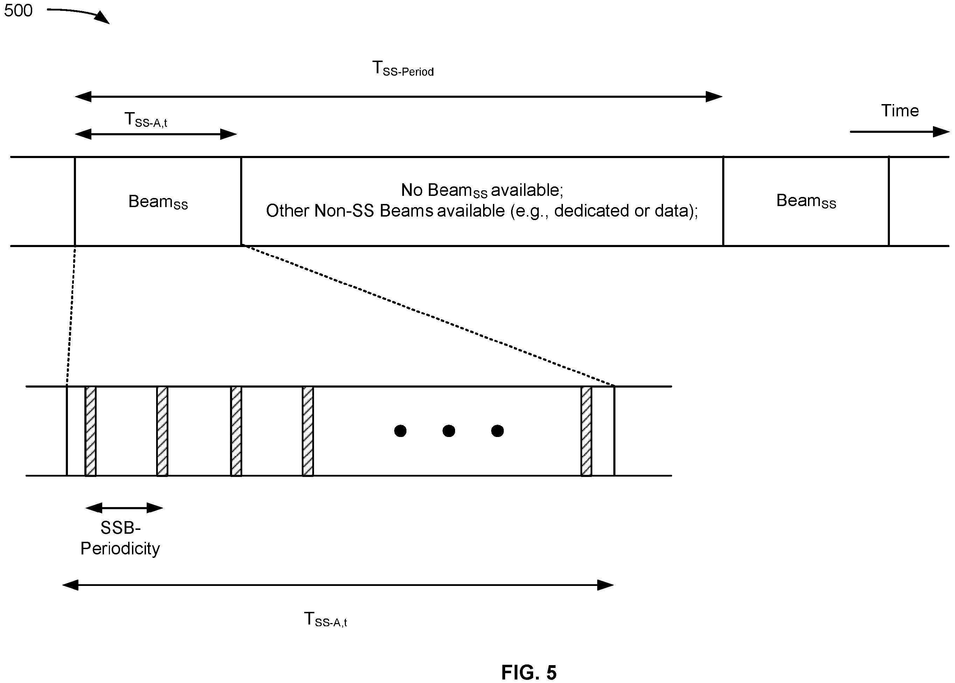

FIG. 5 illustrates an example of synchronization (signal beam visibility 500) to a UE, in accordance with some embodiments. In this illustration, the horizontal axis represents time. Within a time period T_{SS-period} of an SSB transmission cycle, an SSB beam (shown as Beam_{SS} in the figure) is sent during a time period T*_{SS-A,t}* to a coverage area in which the UE is located. This SSB beam can be received by other UEs that are also located in the coverage area. During a remaining time interval of the SSB transmission cycle (e.g., T_{SS-Period}-T_{*SS-A*,t}), no SSB beam is available to the UE and, thus, no SSB beam is visible thereto. During this remaining time period, other non-SSB beams can be visible to the UE (and, similarly, the other UEs). These beams can carry dedicated signaling, and/or can be data beams. The SSB beam repeats every T_{SS-period} and, thus, is visible to the UE every T_{SS-period} for a time length equal to the time period T*_{SS-A,t}* (e.g., the difference between T*_{SS-A,t}* and T_{*SS-A,t*+1} correspond to completion of synchronization signal transmissions by the network node across a plurality of coverage areas using simultaneously-active and spatially-multiplexed beams). The time period T*_{SS-A,t}* can vary from one SSB transmission cycle to another SSB transmission cycle (without necessarily the time period T_{SS-Period} being variable). Similarly, the time period T_{SS-period} can vary from one SSB transmission cycle to another SSB transmission (without necessarily the time period T*_{SS-A}* being variable).

As illustrated in the bottom portion of FIG. 5, during the time period T*_{SS-A,t}*, SSB can be received by periodically receiving OFDM symbols (e.g., four contiguous OFDM symbols corresponding to an instance of the SSB). The SSB periodicity can be configurable to be, for example, 5ms, 10ms, 20ms, 40ms, 80ms, or 160ms.

In an example, the same SSB can transmitted during the time period T*_{SS-A,t}* on all *K* beams to *K* coverage areas. For example, each one of the *K* beams transmits an instance of the SSB (or multiple instances, depending on the SSB periodicity, where this periodicity is the same across the *K* beams). Further, the same SSB can be transmitted during the time period T_{SS-Period} to all *M* coverage areas. During a next transmission cycle, the same SSB or a different SSB can be transmitted.

During the time period T*_{SS-A,t}*, the SSB is transmitted to at least two coverage areas using two corresponding SSB beams. The two SSB beams are spatially-multiplexed to minimize interference. Further, the two SSB beams are simultaneously active, where the actual transmission of the first instance(s) of the SSB on the first beam can, but need not be, simultaneous to the actual transmission of the second instance(s) of the SSB on the second beam. For example, the first instance and the second instance can have the same timing on the two beams (e.g., occur in the same set of OFDM symbols in the slots across the two beams). In another example, the first instance and the second instance can have different timings on the two beams (e.g., the first instance occur in a first set of OFDM symbols, and the second instance occur in a second set of OFDM symbols. These two sets are not time-aligned, although they occur within the same time period T*_{SS-A,t}*)*.*

Based on this SSB cycling mechanism, the network node need not project SSB beams to a coverage area at all times. Doing so saves radio resources, where such resources can be used for other purposes (e.g., for data transmission). A UE needs to scan, at most, T_{SS-Period} for its initial synchronization with the network node. Thereafter, it may be sufficient for the UE to scan for a time period of T*_{SS-A}* for its re-synchronization with the network node.

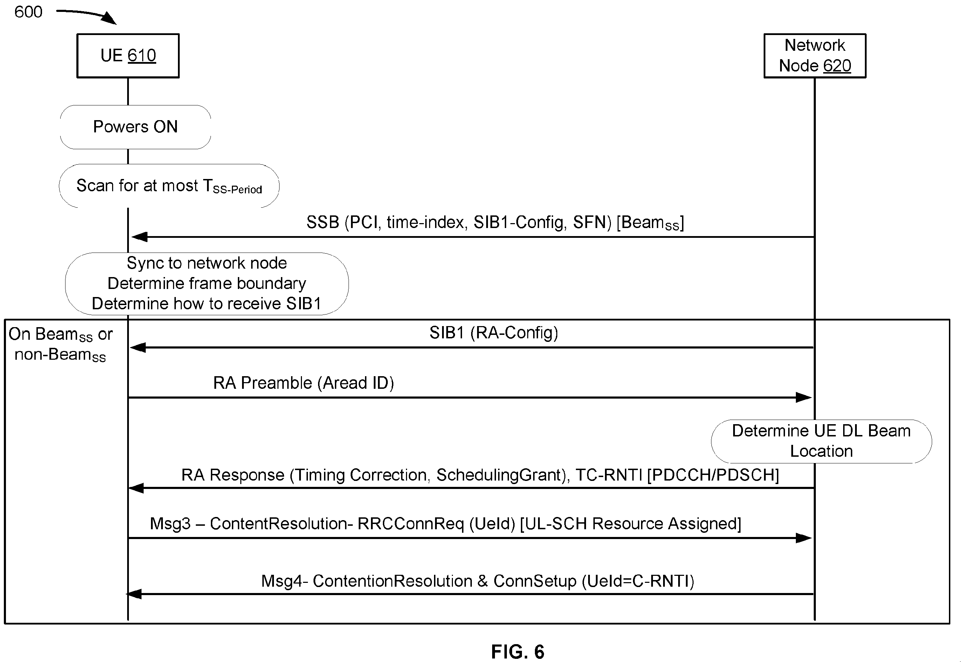

FIG. 6 illustrates an example of a procedure 600 for a synchronization between a UE 610 and a network node 620, in accordance with some embodiments. The UE 610 is located within a coverage area. The network node 620 transmits a default SSB (e.g., SSB 0, SSB 1, or any other indexed SSB set as a default) on a beam associated with the coverage area. The SSB is transmitted using the beam during a time period T*_{SS-A}*, and the SSB transmission is repeated every time period T_{SS-Period}.

As illustrated in the procedure 600, upon a power ON of the UE, the UE scans for an SSB beam. This scanning can be at most T_{SS-Period}. This scanning can cover a set of global synchronization channel numbers (GSCN), such that the UE discovers an SSB transmitted on the SSB beam. The SSB can indicate information (e.g., including system information such as a master information block (MIB)) about a physical cell identity (PCI), a time index, a system frame number (SFN), and a system information block 1 (SIB1) configuration. Based on the indicated information, the UE 610 can complete an initial time and frequency synchronization with the network node 620, determine the frame boundary (e.g., start and end timings of a frame), determine how to receive SIB1, among other operations (e.g., identifying the PCI, performing RSRP and RSRQ measurements, etc.). The MIB provides the UE 610 with information regarding the control resource set (CORESET) and search space used by the PDCCH when a making a resource allocation for SIB1. SIB1 can be scheduled over PDSCH with, for example, a periodicity of 160ms. SIB1 provides the UE 610 with scheduling information for other system information, and can indicate one or more parameters of a random access (RA) procedure configuration (e.g., an RA occasion that indicates an association between SSB and PRACH preambles).

SIB 1 can be transmitted using the SSB beam or a non-SSB beam. Whether the SSB beam is used for SIB 1 can depend on the length of the time period *T_{SS-A}.* If this time period is insufficient to complete an RA procedure, then the network node 620 can decide, use the non-SSB beam, and indicate so to the UE 610 in the MIB. If SIB 1 is transmitted on the SSB beam, then the RA procedure is executed on the SSB beam. Otherwise, the RA procedure is executed on the non-SSB beam.

The network node 620 can configure RA occasions (e.g., an ssb-perRACH-Occasion) based on a SSB beam location. The RA occasion used for the UE 610 (and any other UE located in the same coverage area) indicates the preamble sequence associated with the used SSB, where this SSB is associated with the SSB beam, and this SSB is in turn associated with the coverage area that contains the UE 610. In this example, the SIB1 can indicate an RA-configuration that includes the area identifier (e.g., Area ID) of the coverage area. The area identifier can take the form of a value added to a parameter of a MsgA of a two-step RACH, or explicitly indicated along with an RA preamble.

The network node 620 also has knowledge about timing of the SSB beams (e.g., a mapping between the *K* beams allocated for SSB transmission and the time periods T*_{SS-A,t}* per SSB transmission cycle). Hence, additionally or alternatively to using an area ID, the network node 620 can associate the RA occasion with timing information, and SIB1 need not indicate an area identifier. Instead, upon receiving a message (e.g., MSG1) with an RA preamble, the network node 620 can determine based on the timing and the mapping the SSB-RA preamble association.

The RA procedure illustrated in FIG. 5 is a two-step RA that uses an area identifier in a data part of a message A (MsgA). In particular, upon determining SIB1, the UE 610 can determine the indicated configuration and send an RA preamble (e.g., MSG1) to the network node 620, where this RA preamble indicates the area identifier. Based on the area identifier, the network node 620 determines the downlink beam location used for the UE 610, then sends an RA response (e.g., MSG2) and temporary cell radio network temporary identifier (TC-RNTI) using PDCCH and/or PDSCH. The RA response can indicate a timing correction and scheduling grant. Next, the UE 610 can send a scheduled transmission, such as MSG3, on an UL-SCH resource assigned thereto for contention resolution and an RRC connection request using a UeId. The network node 620 responds with a contention resolution to complete the RA procedure, such as a MSG4 indicating the contention resolution and the connection setup.

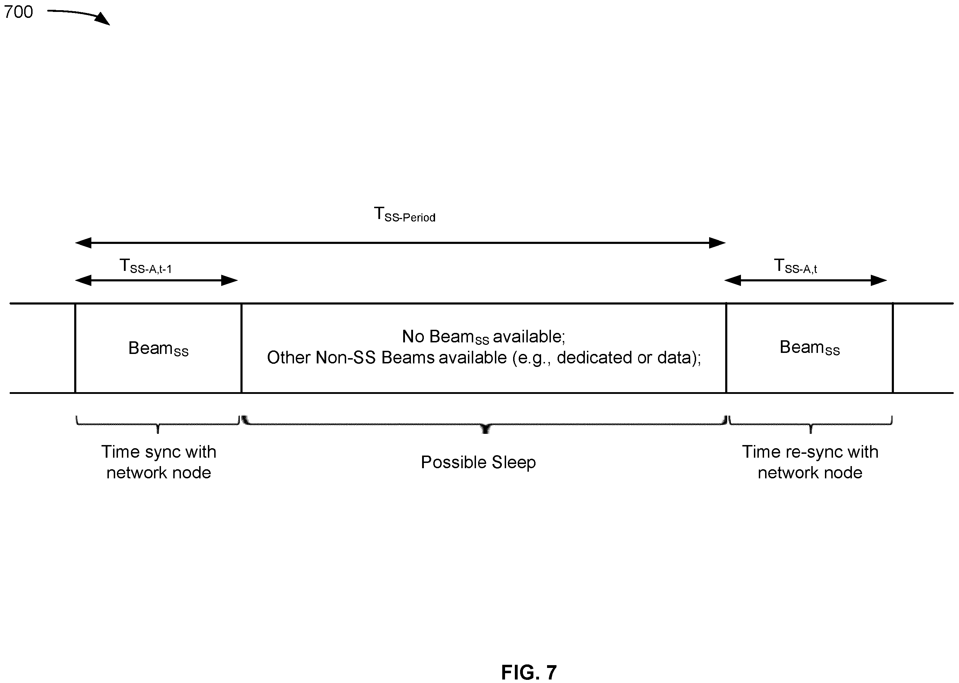

FIG. 7 illustrates an example of re-synchronization 700 between a UE and a network node based on synchronization signal beam visibility, in accordance with some embodiments. The UE is located within a coverage area, and is already synchronized with the network node (e.g., per the procedure 600 of FIG. 6) upon receipt of a first SSB beam during a first time period T*_{SS-A,t-1}.* The SSB beam becomes visible again to the UE in a next SSB beam transmission cycle and during a second time period T*_{SS-A,t}* of this cycle, where the second time period T*_{SS-A,t}* is at a time interval way from the first time period T*_{SS-A,t-1}* equal to the T_{SS-period} of the SSB beam transmission cycle. During the second time period T*_{SS-A,t}*, the UE can perform the re-synchronization. Here also, the re-synchronization may, but need not, use an area identifier of the coverage area, where the area identifier can be indicated in a SIB1 configuration.

Between the end of the first time period T*_{SS-A,t-1}* and the start of the second time period T*_{SS-A,t}*, the UE may enter a sleep state of a discontinuous reception (DRX) cycle. For example, if no operation scheduled (e.g., no DL traffic scheduled, no UL traffic scheduled, no measurements scheduled), the UE may transition into deep sleep during this time interval. The SSB beam may contain paging information, and can indicate to the UE when to wake up to receive SSB and/or other signals on the SSB beam (e.g., during a next time period T_{*SS*-*A,next*}). Generally, paging occasions are configured by the network node during the SSB beam visibility in the coverage area, or when the UE wakes-up intermittently per the DRX cycle (e.g., the DRX cycle may be configured for UE to wake up intermittently to look for paging for SI or MT transmissions).

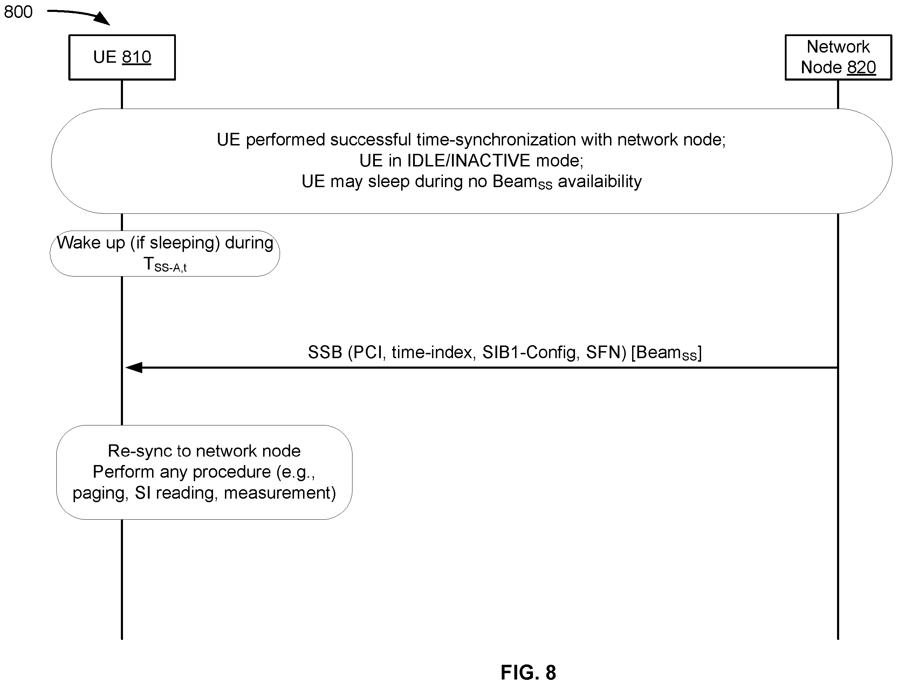

FIG. 8 illustrates an example of a procedure 800 for re-synchronization between a UE 810 and a network node 820 based on synchronization signal beam visibility, in accordance with some embodiments. The UE 810 is located within a coverage area, and is already synchronized with the network node 820 (e.g., per the procedure 600 of FIG. 6) upon receipt of a first SSB beam during a first time period T*_{SS-A,t-1}.* The UE 810 may also be operating in an IDLE mode or INACTIVE mode, and may follow a sleep state for a time period during which no SSB beam is visible to the UE 810 and no UE operations are scheduled.

The procedure 800 includes the UE 810 waking up, if it was in a sleep state, during the second time period T*_{SS-A,t}* to receive SSB. The UE 810 can determine the timing of the SSB (and, similarly, to wake up as applicable) based on scheduling information indicated using the SSB transmission in the first first time period T*_{SS-A,t-1}.* Alternatively, the scheduling information can be pre-configured using an RRC configuration. In both cases, the SSB received during the second time period T*_{SS-A,t}* can indicate information about the PCI, time index, SFN, and SIB1 configuration. Based on the indicated information, the UE 820 can perform a re-synchronization with the network 820 by determining, for instance, timing correction and frame boundaries. The UE 820 can also perform any needed or scheduled procedure, such as paging or system information reading. Such procedures can be defined in technical specifications for a fifth-generation mobile network (terrestrial and/or non-terrestrial).

As explained herein above, SIB1 can be included in an SSB beam at each coverage area. The time period T*_{SS-Period}* of an SSB transmission cycle (e.g., a few seconds) can be longer than the SIB1 periodicity (e.g., 160ms) in different geographical areas. Nonetheless, the periodicity of SIB1 is not applicable across the different coverage areas.

If SIB 1 is to be transmitted to a coverage area using a non-SSB beam, then a network node can configure RA parameters based on an area identifier of the coverage area. The network node can do so by maintaining a mapping that associates, per coverage area, the SSB beam and non-SSB beams used for that area. The UE need not perform any additional operation due to the fact that SIB1 is transmitted using the non-SSB beam, instead of the SSB-beam.

Furthermore, the RA-configuration can be associated with timing of the SSB beam visibility at a particular coverage read area, which is unique within T*_{SS-Period}.* This RA-configuration can be defined using parameters that are pre-configured (e.g., a pre-definition of the timing) or estimated (e.g., based on the actual timing). This timing information can be used in addition or as an alternative to the area identifier. If used in the alternative, then the UE need not send an area identifier to the network node. Instead, the timing of the RA would be used by the network node to determine the UE downlink Beam location.

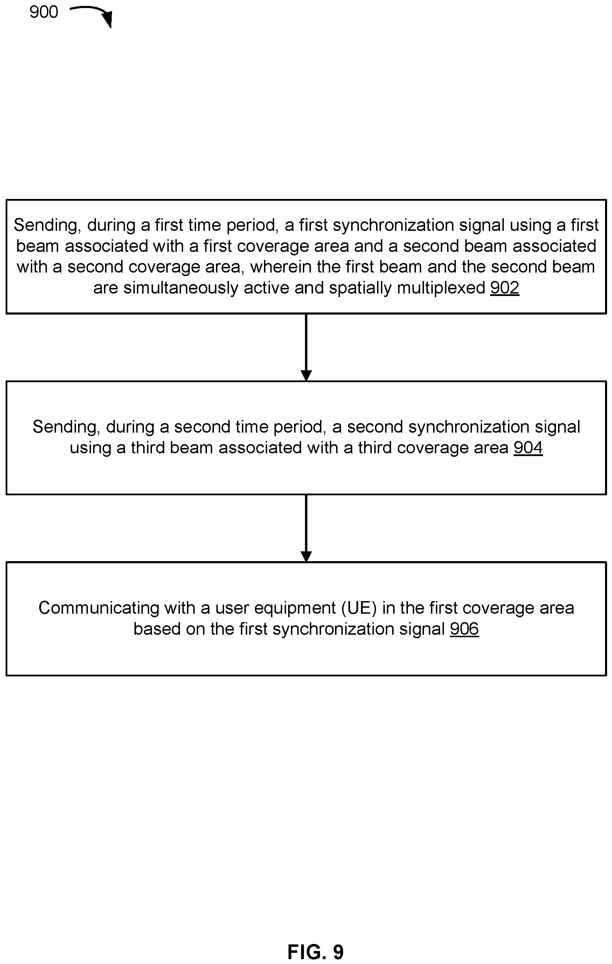

FIG. 9 illustrates an example of an operational flow/algorithmic structure 900 for cycling synchronization signal beams across coverage areas, in accordance with some embodiments. The operation flow/algorithmic structure 900 may be performed or implemented by a network node, such as the network node 108, the gNB 1300, or components thereof, for example, processors 1304.

The operation flow/algorithmic structure 900 may include, at 902, sending, during a first time period, a synchronization signal using a beam associated with a coverage area, and a second beam associated with a second coverage area, wherein the first beam and the second beam are simultaneously-active and spatially-multiplexed. In some embodiments, the first and second coverage areas belong to a first set *of K* coverage areas from *M* coverage areas. The network node allocates *K* beams for an SSB transmission to the *K* coverage areas. The same SSB (e.g., instances thereof) can be transmitted on the different *K* SSB beams, and these transmissions may be simultaneous.

The operation flow/algorithmic structure 900 may further include, at 904, sending, during a second time period, a second synchronization signal using a third beam associated with a third coverage area. In some embodiments, the third coverage area belongs to a first set of *K* coverage areas from the *M* coverage areas. The first and second time periods can occur within the same SSB transmission cycle. The network node allocates *K* beams for the SSB transmission to the second coverage areas set. The same SSB (e.g., instances thereof) transmitted during the first time period may also be transmitted on the *K* SSB beams associated with the second coverage area set.

The operation flow/algorithmic structure 900 may further include, at 906, communicating with a UE in the first coverage area based on the first synchronization signal. In some embodiments, a synchronization is performed based on the SSB transmitted to the first coverage area during the first time period to enable the communications. The communications can use the SSB beam (e.g., the SSB beam can also carry data traffic) or non-SSB beams during the SSB transmission cycle. Subsequently, in a next SSB transmission cycle, another SSB transmission is performed and the UE can re-synchronize with the network node.

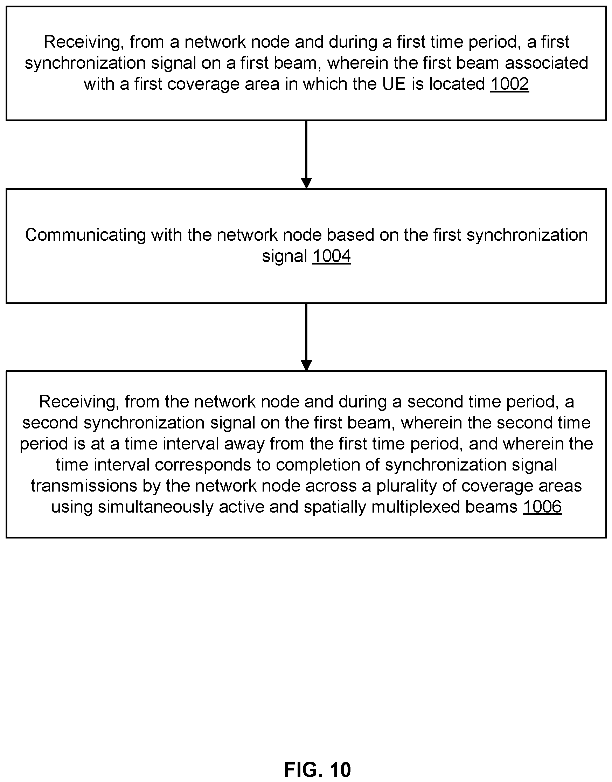

FIG. 10 illustrates an example of an operational flow/algorithmic structure 1000 for determining synchronization signals based on synchronization signal beam visibility, in accordance with some embodiments. The operation flow/algorithmic structure 1000 may be performed or implemented by a UE such as, for example, the UE 104, 1200, or components thereof, for example, processors 1204.

The operation flow/algorithmic structure 1000 may include, at 1002, receiving, from a network node and during a time period, a synchronization signal on a beam, wherein the beam associated with a first coverage area in which the UE is located. In some embodiments, the UE receives an SSB on an SSB beam. This reception can follow a UE power ON, whereby the UE performs a scan for the SSB for a time length of at most Tss-Period.

The operation flow/algorithmic structure 1000 may further include, at 1004, communicating with the network node based on the first synchronization signal. In some embodiments, a synchronization is performed based on the received SSB transmitted to enable the communications. The communications can use the SSB beam (e.g., the SSB beam can also carry data traffic) or non-SSB beams during the SSB transmission cycle.

The operation flow/algorithmic structure 1000 may further include, at 1006, receiving, from the network node and during a second time period, a second synchronization signal on the first beam, wherein the second time period is at a time interval away from the first time period, and wherein the time interval corresponds to completion of synchronization signal transmissions by the network node across a plurality of coverage areas using simultaneously-active and spatially-multiplexed beams. In some embodiments, the time interval corresponds to T_{SS-Period}. The UE can receive SSB on the SSB beam during the second time period, and perform a synchronization with the network node.

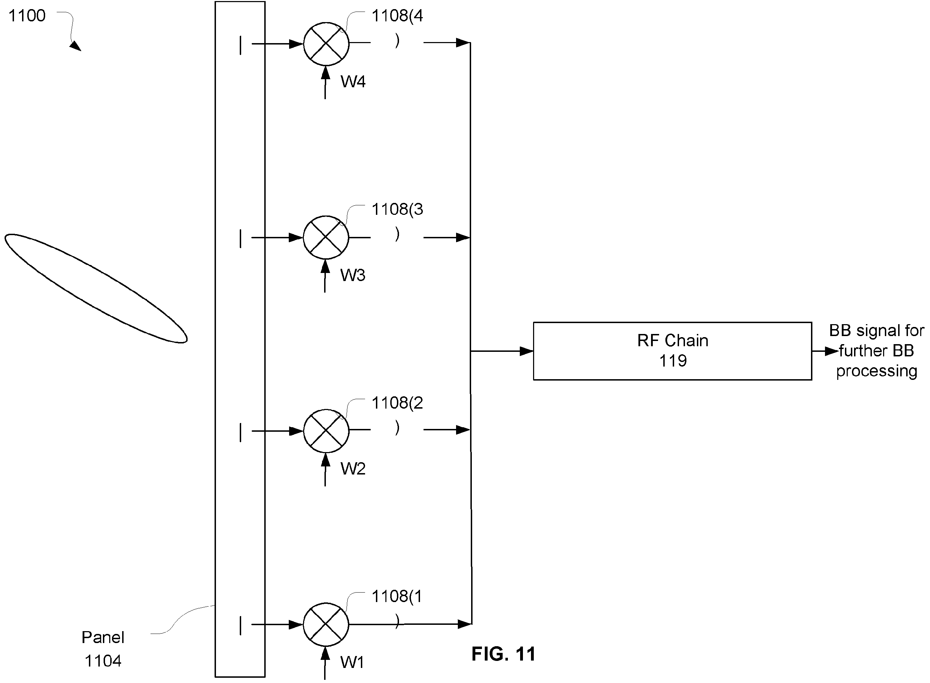

FIG. 11 illustrates receive components 1100 of the UE 104, in accordance with some embodiments. The receive components 1100 may include an antenna panel 1104, which includes a number of antenna elements. The panel 1104 is shown with four antenna elements, but other embodiments may include other numbers.

The antenna panel 1104 may be coupled to analog beamforming (BF) components that include a number of phase shifters 1108(1)-1108(4). The phase shifters 1108(1)-1108(4) may be coupled with a radio-frequency (RF) chain 1112. The RF chain 1112 may amplify a receive analog RF signal, downconvert the RF signal to baseband, and convert the analog baseband signal to a digital baseband signal that may be provided to a baseband processor for further processing.

In various embodiments, control circuitry, which may reside in a baseband processor, may provide BF weights (for example W1-W4). These may represent phase shift values to the phase shifters 1108(1) - 1108(4), to provide a receive beam at the antenna panel 1104. These BF weights may be determined based on the channel-based beamforming.

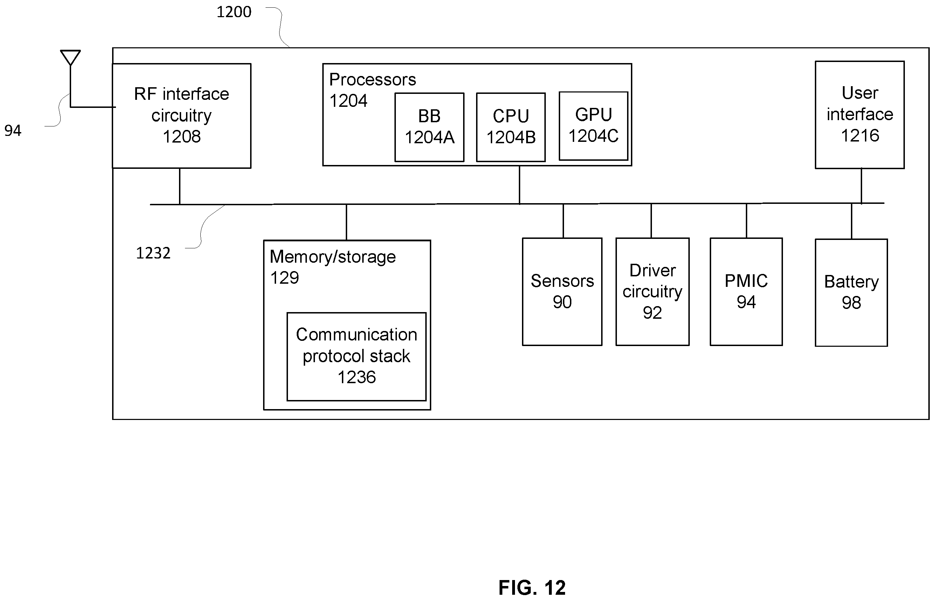

FIG. 12 illustrates a UE 1200, in accordance with some embodiments. The UE 1200 may be similar to, and substantially interchangeable with, UE 104 of FIG. 1.

Similar to that described above with respect to UE 104, the UE 1200 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices, or relaxed-IoT devices. In some embodiments, the UE may be a reduced capacity UE or NR-Light UE.

The UE 1200 may include processors 1204, RF interface circuitry 1208, memory/storage 1212, user interface 1216, sensors 1220, driver circuitry 1222, power management integrated circuit (PMIC) 1224, and battery 1228. The components of the UE 1200 may be implemented as integrated circuits (ICs), portions thereof, discrete electronic devices, or other modules, logic, hardware, software, firmware, or a combination thereof. The block diagram of FIG. 12 is intended to show a high-level view of some of the components of the UE 1200. However, some of the components shown may be omitted, additional components may be present, and different arrangements of the components shown may occur in other implementations.

The components of the UE 1200 may be coupled with various other components over one or more interconnects 1232, which may represent any type of interface, input/output, bus (local, system, or expansion), transmission line, trace, optical connection, etc. that allows various circuit components (on common or different chips or chipsets) to interact with one another.

The processors 1204 may include processor circuitry such as, for example, baseband processor circuitry (BB) 1204A, central processor unit circuitry (CPU) 1204B, and graphics processor unit circuitry (GPU) 1204C. The processors 1204 may include any type of circuitry or processor circuitry that executes or otherwise operates computer-executable instructions, such as program code, software modules, or functional processes from memory/storage 1212 to cause the UE 1200 to perform operations as described herein.

In some embodiments, the baseband processor circuitry 1204A may access a communication protocol stack 1236 in the memory/storage 1212 to communicate over a 3GPP compatible network. In general, the baseband processor circuitry 1204A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum "NAS" layer. In some embodiments, the PHY layer operations may additionally/alternatively be performed by the components of the RF interface circuitry 1208.

The baseband processor circuitry 1204A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The baseband processor circuitry 1204A may also access group information 1224 from memory/storage 1212 to determine search space groups in which a number of repetitions of a PDCCH may be transmitted.

The memory/storage 1212 may include any type of volatile or non-volatile memory that may be distributed throughout the UE 1200. In some embodiments, some of the memory/storage 1212 may be located on the processors 1204 themselves (for example, L1 and L2 cache), while other memory/storage 1212 is external to the processors 1204 but accessible thereto via a memory interface. The memory/storage 1212 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1208 may include transceiver circuitry and a radio frequency front module (RFEM) that allows the UE 1200 to communicate with other devices over a radio access network. The RF interface circuitry 1208 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via an antenna 1224 and proceed to filter and amplify (with a low-noise amplifier) the signal. The signal may be provided to a receiver of the transceiver that down-converts the RF signal into a baseband signal that is provided to the baseband processor of the processors 1204.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1224.

In various embodiments, the RF interface circuitry 1208 may be configured to transmit/receive signals in a manner compatible with NR access technologies.

The antenna 1224 may include a number of antenna elements that each convert electrical signals into radio waves to travel through the air and to convert received radio waves into electrical signals. The antenna elements may be arranged into one or more antenna panels. The antenna 1224 may have antenna panels that are omnidirectional, directional, or a combination thereof to enable beamforming and multiple input, multiple output communications. The antenna 1224 may include microstrip antennas, printed antennas fabricated on the surface of one or more printed circuit boards, patch antennas, phased array antennas, etc. The antenna 1224 may have one or more panels designed for specific frequency bands including bands in FR1 or FR2.

The user interface circuitry 1216 includes various input/output (I/O) devices designed to enable user interaction with the UE1200 .The user interface 1216includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, projectors, etc.), with the output of characters, graphics, multimedia objects, and the like being generated or produced from the operation of the UE 1200.

The sensors 1220 may include devices, modules, or subsystems whose purpose is to detect events or changes in its environment and send the information (sensor data) about the detected events to some other device, module, subsystem, etc. Examples of such sensors include, *inter alia*, inertia measurement units comprising accelerometers; gyroscopes; or magnetometers; microelectromechanical systems or nanoelectromechanical systems comprising 3-axis accelerometers; 3-axis gyroscopes; or magnetometers; level sensors; flow sensors; temperature sensors (for example, thermistors); pressure sensors; barometric pressure sensors; gravimeters; altimeters; image capture devices (for example; cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1222 may include software and hardware elements that operate to control particular devices that are embedded in the UE 1200, attached to the UE 1200, or otherwise communicatively coupled with the UE 1200. The driver circuitry 1222 may include individual drivers allowing other components to interact with or control various input/output (I/O) devices that may be present within, or connected to, the UE 1200. For example, driver circuitry 1222 may include a display driver to control and allow access to a display device, a touchscreen driver to control and allow access to a touchscreen interface, sensor drivers to obtain sensor readings of sensor circuitry 1220 and control and allow access to sensor circuitry 1220, drivers to obtain actuator positions of electro-mechanic components or control and allow access to the electro-mechanic components, a camera driver to control and allow access to an embedded image capture device, audio drivers to control and allow access to one or more audio devices.

The PMIC 1224 may manage power provided to various components of the UE 1200. In particular, with respect to the processors 1204, the PMIC 1224 may control power-source selection, voltage scaling, battery charging, or DC-to-DC conversion.

In some embodiments, the PMIC 1224 may control, or otherwise be part of, various power saving mechanisms of the UE 1200. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 1200 may power down for brief intervals of time and thus save power. If there is no data traffic activity for an extended period of time, then the UE 1200 may transition off to an RRC_Idle state, where it disconnects from the network and does not perform operations such as channel quality feedback, handover, etc. The UE 1200 goes into a very low power state and it performs paging where again it periodically wakes up to listen to the network and then powers down again. The UE 1200 may not receive data in this state; in order to receive data, it must transition back to RRC Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1228 may power the UE 1200, although in some examples the UE 1200 may be mounted deployed in a fixed location, and may have a power supply coupled to an electrical grid. The battery 1228 may be a lithium ion battery, a metal-air battery, such as a zinc-air battery, an aluminum-air battery, a lithium-air battery, and the like. In some implementations, such as in vehicle-based applications, the battery 1228 may be a typical lead-acid automotive battery.

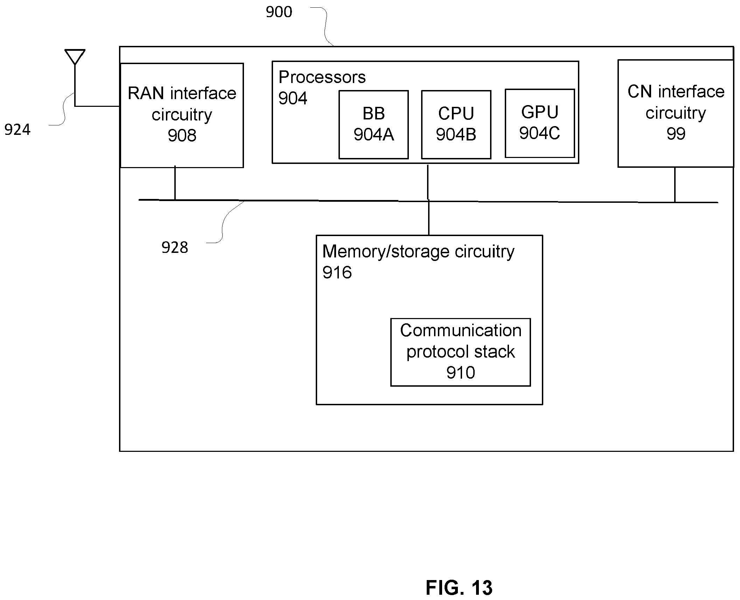

FIG. 13 illustrates a gNB 1300 in accordance with some embodiments. The gNB node 1300 may be an example of the network node 108.

The gNB 1300 may include processors 1304, RF interface circuitry 1308, core network (CN) interface circuitry 1312, and memory/storage circuitry 1316.

The components of the gNB 1300 may be coupled with various other components over one or more interconnects 1328.

The processors 1304, RF interface circuitry 1308, memory/storage circuitry 1316 (including communication protocol stack 1310), antenna 1324, and interconnects 1328 may be similar to like-named elements shown and described with respect to FIG. 10.

The CN interface circuitry 1312 may provide connectivity to a core network, for example, a 5^{th} Generation Core network (5GC) using a 5GC-compatible network interface protocol such as carrier Ethernet protocols, or some other suitable protocol. Network connectivity may be provided to/from the gNB 1300 via a fiber optic or wireless backhaul. The CN interface circuitry 1312 may include one or more dedicated processors or FPGAs to communicate using one or more of the aforementioned protocols. In some implementations, the CN interface circuitry 1312 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 includes a method implemented by a network node, the method comprising: sending, during a first time period, a first synchronization signal using a first beam associated with a first coverage area and a second beam associated with a second coverage area, wherein the first beam and the second beam are simultaneously active and spatially multiplexed; sending, during a second time period, a second synchronization signal using a third beam associated with a third coverage area; and communicating with a user equipment (UE) in the first coverage area based on the first synchronization signal.

Example 2 includes a method of example 1, further comprising: sending, during the first time period, the first synchronization signal using a first set of *K* simultaneously active and spatially multiplexed beams, wherein the first coverage area and the second coverage area belong to a first set *of K* coverage areas from *M* coverage areas, *K* and *M* being positive integers.

Example 3 includes a method of example 2, further comprising sending, during the second time period, the second synchronization signal using a second set of *K* simultaneously active and spatially multiplexed beams, wherein the third coverage area belongs to a second set *of K* coverage areas from the *M* coverage areas.

Example 4 includes a method of example 3, further comprising sending, during a third time period, a third synchronization signal using the first beam and the second beam, wherein the third time period is at a time interval away from the first time interval, and wherein the time interval corresponds to the network node completing synchronization signal transmission to the *M* coverage areas.

Example 5 includes a method of any preceding example, further comprising: sending, using the first beam and the second beam, system information associated with a random access procedure.

Example 6 includes a method of any preceding example, further comprising: sending, during a third time period, system information associated with a random access procedure, the system information sent using a third beam associated with the first coverage area.

Example 7 includes a method of example 6, further comprising: maintaining a mapping information indicating that, for the first coverage area, the first beam is used for synchronization signal transmission and the third beam is used for another signal transmission; and configuring a parameter of the random access procedure based on the mapping information.

Example 8 includes a method of any preceding example, further comprising: receiving, from the UE, a random access message that includes an identifier of the first coverage area.

Example 9 includes a method of any preceding example, further comprising: associating a configuration of a random access procedure with the first time period; receiving, from the UE, a random access message associated with the random access procedure; and determining that the UE is located in the first coverage based on the configuration of the random access procedure being associated with the first time period.

Example 10 includes a method of any preceding example, further comprising: sending, during the first time period, a paging occasion to the UE using the first beam.

Example 11 includes a method of any preceding example, wherein sending the first synchronization signal using the first beam and the second beam includes sending simultaneously a first instance of a synchronization signal block (SSB) on the first beam and a second instance of the SSB on the second beam.

Example 12 includes a method of example 11, wherein sending the third synchronization signal using the third beam includes sending a third instance of the SSB on the third beam.

Example 13 includes a method implemented by a user equipment (UE), the method comprising: receiving, from a network node and during a first time period, a first synchronization signal on a first beam, wherein the first beam associated with a first coverage area in which the UE is located; communicating with the network node based on the first synchronization signal; and receiving, from the network node and during a second time period, a second synchronization signal on the first beam, wherein the second time period is at a time interval away from the first time period, and wherein the time interval corresponds to completion of synchronization signal transmissions by the network node across a plurality of coverage areas using simultaneously active and spatially multiplexed beams.

Example 14 includes a method of example 13, further comprising: receiving, from the network node on the first beam and during the first time period, system information associated with a random access procedure.

Example 15 includes a method of example 13 or 14, further comprising: receiving, from the network node on a second beam and during a third time period, a third signal of a different type than the first synchronization signal and the second synchronization signal, wherein the third time period is between the first time period and the second time period.

Example 16 includes a method of example 15, wherein the third signal indicates, to the UE, system information with a random access procedure.

Example 17 includes a method of example 15 or 16, wherein the third signal indicates, to the UE, a paging occasion.

Example 18 includes a method of any example 13 through 17, further comprising: sending, to the network node, a random access message that includes an identifier of the first coverage area.

Example 19 includes a method of any example 13 through 18, further comprising: operating, during a third time period, in a sleep state of a discontinuous reception (DRX) cycle, wherein the third time period is between the first time period and the second time period.

Example 20 includes a UE comprising means to perform one or more elements of a method described in or related to any of the examples 13-19.

Example 21 includes one or more non-transitory computer-readable media comprising instructions to cause a UE, upon execution of the instructions by one or more processors of the UE, to perform one or more elements of a method described in or related to any of the examples 13-19.

Example 22 includes a UE comprising logic, modules, or circuitry to perform one or more elements of a method described in or related to any of the examples 13-19.

Example 23 includes a UE comprising: one or more processors and one or more computer-readable media comprising instructions that, when executed by the one or more processors, cause the one or more processors to perform one or more elements of a method described in or related to any of the examples 13-19.

Example 24 includes a system comprising means to perform one or more elements of a method described in or related to any of the examples 13-19.

Example 25 includes a network node comprising means to perform one or more elements of a method described in or related to any of the examples 1-12.

Example 26 includes one or more non-transitory computer-readable media comprising instructions to cause a network node, upon execution of the instructions by one or more processors of the network node, to perform one or more elements of a method described in or related to any of the examples 1-12.

Example 27 includes a network comprising logic, modules, or circuitry to perform one or more elements of a method described in or related to any of the examples 1-12.

Example 28 includes a network node comprising: one or more processors and one or more computer-readable media comprising instructions that, when executed by the one or more processors, cause the one or more processors to perform one or more elements of a method described in or related to any of the examples 1-12.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.
The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A network node comprising:
one or more processors; and
one or more memory storing computer-readable instructions that upon execution by the one or more processors, configure the network node to:
send, during a first time period, a first synchronization signal using a first beam associated with a first coverage area and a second beam associated with a second coverage area, wherein the first beam and the second beam are simultaneously-active and spatially-multiplexed;
send, during a second time period, a second synchronization signal using a third beam associated with a third coverage area; and
communicate with a user equipment (UE) in the first coverage area based on the first synchronization signal.

2. The network node of claim 1, wherein the computer-readable instructions upon execution further configure the network node to:
send, during the first time period, the first synchronization signal using a first set *of K* simultaneously-active and spatially-multiplexed beams, wherein the first coverage area and the second coverage area belong to a first set *of K* coverage areas from *M* coverage areas, *K* and *M* being positive integers.

3. The network node of claim 2, wherein the computer-readable instructions upon execution further configure the network node to:
send, during the second time period, the second synchronization signal using a second set of *K* simultaneously-active and spatially-multiplexed beams, wherein the third coverage area belongs to a second set *of K* coverage areas from the *M* coverage areas.

4. The network node of any of the preceding claims, wherein sending the first synchronization signal using the first beam and the second beam includes sending simultaneously a first instance of a synchronization signal block (SSB) on the first beam and a second instance of the SSB on the second beam.

5. The network node of any of the preceding claims, wherein the computer-readable instructions upon execution further configure the network node to:
send, using the first beam and the second beam, system information associated with a random access procedure.

6. The network node of any of the preceding claims, wherein the computer-readable instructions upon execution further configure the network node to:
send, during a third time period, system information associated with a random access procedure, the system information sent using a fourth beam associated with the first coverage area.

7. The network node of any of the preceding claims, wherein the computer-readable instructions upon execution further configure the network node to:
receive, from the UE, a random access message that includes an identifier of the first coverage area.

8. The network node of any of the preceding claims, wherein the computer-readable instructions upon execution further configure the network node to:
associate a configuration of a random access procedure with the first time period;
receive, from the UE, a random access message associated with the random access procedure; and
determine that the UE is located in the first coverage area based on the configuration of the random access procedure being associated with the first time period.

9. The network node of any of the preceding claims, wherein the computer-readable instructions upon execution further configure the network node to:
send, during the first time period, a paging occasion to the UE using the first beam.

10. One or more computer-readable media storing instructions that upon execution on a user equipment (UE), cause the UE to perform operations comprising:
receiving, from a network node and during a first time period, a first synchronization signal on a first beam, wherein the first beam associated with a first coverage area in which the UE is located;
communicating with the network node based on the first synchronization signal; and
receiving, from the network node and during a second time period, a second synchronization signal on the first beam, wherein the second time period is at a time interval away from the first time period, and wherein the time interval corresponds to completion of synchronization signal transmissions by the network node across a plurality of coverage areas using simultaneously-active and spatially-multiplexed beams.

11. The one or more computer-readable media of claim 10, wherein the operations further comprise:
receive, from the network node on the first beam and during the first time period, system information associated with a random access procedure.

12. The one or more computer-readable media of any of claims 10-11, wherein the operations further comprise:
receive, from the network node on a second beam and during a third time period, a third signal of a different type than the first synchronization signal and the second synchronization signal, wherein the third time period is between the first time period and the second time period.

13. A method implemented by a UE, the method comprising:
receiving, from a network node and during a first time period, a first synchronization signal on a first beam, wherein the first beam associated with a first coverage area in which the UE is located;
communicating with the network node based on the first synchronization signal; and
receiving, from the network node and during a second time period, a second synchronization signal on the first beam, wherein the second time period is at a time interval away from the first time period, and wherein the time interval corresponds to completion of synchronization signal transmissions by the network node across a plurality of coverage areas using simultaneously-active and spatially-multiplexed beams.

14. The method of claim 13 further comprising:
sending, to the network node, a random access message that includes an identifier of the first coverage area.

15. The method of any of claims 13-14 further comprising:
operating, during a third time period, in a sleep state of a discontinuous reception (DRX) cycle, wherein the third time period is between the first time period and the second time period.
